# EUROPEAN PATENT APPLICATION

(11) **EP 4 454 870 A1**
(43) Date of publication of application: **30.10.2024**
(21) Application number: 23170565.8
(22) Date of filing: 28.04.2023
(51) Int. Cl.: B29C 70/54, B29C 53/04, B29D 99/00, B29B 11/16, F03D 1/06, B64C 27/473, B29C 70/28, B29C 70/30, B29C 70/56, B29C 70/88, B29C 70/02, B29L 31/08

(54) **METHOD FOR ARRANGING AT LEAST ONE BLADE BUILDING PREFORM ELEMENT IN A BLADE MOLD FOR FURTHER PROCESSING, PREFORM ELEMENT, METHOD FOR MANUFACTURING A PREFORM ELEMENT, BENDING TOOL FOR A BLADE OR A YOKE, PREFORM ELEMENT HANDLING MEANS**

(71) Applicant: Siemens Gamesa Renewable Energy A/S, 7330 Brande (DK)
(72) Inventor: Joergensen, Jens Grandjean, 9000 Aalborg (DK); Kettner, Theresa, 9220 Aalborg (DK); Mateu, Alfredo Esbri, 6580 Vamdrup (DK)
(74) Representative: SGRE-Association

(57) **Abstract**

Method for arranging at least one blade building preform element (7) in a blade mold (8) for further processing, comprising the steps:
a) placing the at least one preform element (7) on a mold surface of the blade mold (8),
b) placing at least one further preform element (26) and/or at least one blade component and/or at least one manufacturing tool (10) on the mold surface and/or on the at least one preform element (7) by moving it in a moving direction along a moving path (12), and
c) bending at least one part of at least one bending section (9) of the at least one preform element (7) such that the at least one bending section (9) at least partially overlaps the at least one further preform element (26) and/or the at least one blade component and/or at least one manufacturing tool (10) such that the at least one bending section (9) blocks a reverse movement of the at least one further preform element (26) and/or the at least one blade component and/or at least one manufacturing tool (10) in the reverse direction along the moving path (12).

## Description

The present invention relates to a method for arranging at least one blade building preform element in a blade mold for further processing. Furthermore, the present invention relates to a preform element to be used in this method. Additionally, the present invention relates to a method for manufacturing this preform element. The present invention furthermore relates to a bending tool for a blade mold or a yoke and to a preform element handling means.

Wind turbines usually comprise a rotor with a plurality of rotor blades, generally for converting wind energy into electrical energy by means of a generator. Due to the enormous size of wind turbine blades, their manufacturing is a major challenge for manufacturers of wind turbines.

One technology for facilitating the fabrication of wind turbine blades is the usage of preform building elements or preform elements, respectively. Preform elements are preform parts or segments of the blade which are used for building the final blade. In many cases, preform elements are manufactured by stacking plies of particularly fiber materials with a binding agent which is applied to each of the layers. Next, the binding agent is activated by, e.g., heating the layers. This activation causes the layers to be bound together such that the preform element can be handled as a single component. The blade is then manufactured in the blade mold by placing the preform elements and particularly further blade components on the blade mold surface and adhering these components to each other, particularly using an epoxy resin.

Particularly, since the preforms are often placed on the mold surface with some overlap to ensure the structural integrity of the blade, particularly for integral blades problems may occur. Integral blades are single-piece wind turbine blades which are manufactured in a single process. After the preform elements and particularly other blade components are arranged in the blade mold, these components of the integral blade are adhered to each other, particularly by injecting resin under vacuum conditions. Subsequently, the resin is hardened at a high temperature. Finally, the blade is removed from the blade mold. This technology allows for the manufacturing the blade as a complete, seamless component which is finished in a single process.

As it has been already addressed, the preform elements and/or other components of the blade and/or manufacturing tools which are required for the respective manufacturing process often overlap each other. Since these components can be assumed as rigid bodies, there might occur a problem with respect to placing these components on the mold surface and/or bringing them into their designated positions successively, since already positioned preform elements might block the respectively required movement of further preform elements and/or blade components and/or manufacturing tools.

It is an object of the invention to realize an enhanced concept for manufacturing wind turbine rotor blades, in particular to overcome the problem addressed above.

According to the present invention, the problem is solved by a method as initially described, comprising the following steps:
a) placing the at least one preform element on a mold surface of the blade mold,
b) placing at least one further preform element and/or at least one blade component and/or at least one manufacturing tool on the mold surface and/or on the at least one preform element by moving it in a moving direction along a moving path, and
c) bending at least one part of at least one bending section of the at least one preform element such that the at least one bending section at least partially overlaps the at least one further preform element and/or the at least one blade component and/or the at least one manufacturing tool such that the at least one bending section blocks a reverse movement of the at least one further preform element and/or the at least one blade component and/or the at least one manufacturing tool in the reverse direction along the moving path.

In the method according to the present invention, during step a), the preform element is brought into its designated position on or in the blade mold. After this, during step b), the further preform element and/or the blade component and/or the manufacturing tool is also brought into its designated position on or in the blade mold or on the preform element. The designated positions are the positions of the respective components relatively to the mold surface and relatively to each other which is required for further processing, particularly for adhering the respective components to each other. Particularly, the relative positions between the components being in their designated positions on or in the blade mold correspond to the relative positions between these components in the final blade.

Regarding step a), the blade mold with the mold surface is provided. The blade mold is adapted to hold or carry the preform element and the further preform element and/or the blade component and/or the manufacturing tool in their designated positions. Regarding the placing of the at least one preform element on the mold surface, particularly several preform elements can be placed on the mold surface adjacently to and/or stacked upon each other. The preform element can be placed directly on the mold surface. However, it is also possible that other components of the preform element can be arranged on the mold surface before the preform element is placed there.

Regarding step b), the further preform element and/or the blade component and/or the manufacturing tool is brought into its designated position. Particularly, if the further preform element is provided, it can be arranged also on the mold surface, particularly adjacently to the preform element. If the blade component and/or the manufacturing tool is provided, it can be positioned on the preform element and particularly on the further preform element. Hence, the position of the blade component and/or of the manufacturing tool can be within or in the interior the blade, particularly for realizing a sufficient mechanical stability of the blade. The further preform element and/or the blade component and/or the manufacturing tool can be placed directly on the mold surface and/or on the preform element. However, it is also possible that other components of the preform element can be arranged on the mold surface and/or on the preform element before the further preform element is placed there.

The further preform element and/or the blade component and/or the manufacturing tool is placed on its designated position by moving the further preform element and/or the blade component and/or the manufacturing tool along the moving direction which is defined by the, particularly one-dimensional, moving path. The moving path can be a straight or curved line. Typically, the moving path leads vertically down towards the mold surface such that the further preform element and/or the blade component and/or the manufacturing tool is lowered on the mold surface or the preform element from above.

Regarding step c), the bending section of the preform element is bent such that the bending section overlaps the further preform element and/or the blade component and/or the manufacturing tool. This overlap causes the effect that the bending section blocks the reverse movement of the further preform element and/or the blade component and/or the manufacturing tool in the reverse direction along the moving path. Hence, after finishing step c), the components of the blade to be manufactured comprise shapes and are in relative positions to each other such that removing the further preform element and/or the blade component and/or the manufacturing tool along the moving path is not possible due to the overlap. The respective configuration leads to a stable mechanical stability of the, particularly integral, blade to be manufactured.

Since the preform element is brought into its designated position before the further preform element and/or the blade component and/or the manufacturing tool is brought into its designated position, the respective overlap would block the positioning of the further preform element and/or the blade component and/or the manufacturing tool into the designated position. That means that moving the preform element and/or the blade component and/or the manufacturing tool along the moving path into the designated position would be not possible since the bending section would be arranged such that the further preform element and/or the blade component and/or the manufacturing tool would run against the bending section during this movement because of its physical expansion. To avoid this problem, one of the basic ideas of the present invention is that the preform element or bending section, respectively, comprises a temporary shape such that it does not block the moving path of the further preform element and/or the blade component and/or the manufacturing tool while it is brought into its designated position in step b). Once the components of the blade are brought into their designated positions, in step c), the temporary shape is bent or deformed into a final shape such that the preform element overlaps the further preform element and/or the blade component and/or the manufacturing tool.

The bending section of the preform element can be a part of the preform element but also the whole preform element. The bending section is bendable to bring the preform element into the final shape without damaging the respective preform element. Hence, the preform element is brought into the final shape by an elastic and/or plastic bending.

The mold surface can be a, particularly concavely or convexly, shaped surface comprising an overall shape which corresponds to the shape of the final blade. The shape of the mold surface preferably also corresponds to the shape of the respective components which are positioned there. The mold surface typically comprises a U-shape with an opening which faces upwards. The blade mold can be made a of a material like wood or, particularly foamed, plastic. The blade mold can be made of a material like metal such that the blade mold withstands higher temperatures which might be required for the further manufacturing process, particularly the hardening of the resin. The blade mold can be made of a composite material, e.g., a fiber composite.

The preform element can be manufactured such that it initially or innately comprises the temporary shape. In this embodiment, already the manufacturing of the preform element realizes the temporary shape which is required for performing step b) of the method according to the present invention.

Alternatively, the preform element can be manufactured such that it initially or innately comprises the final shape. Particularly in this embodiment, in step a), the at least one bending section of the at least one preform element which is placed on the mold surface would block the moving path of the at least one further preform element and/or of the at least one blade component and/or of the at least one the manufacturing tool, wherein, between steps a) and b), the at least one bending section is bent or deformed such that the at least one bending section does not block the moving path. Hence, the respective is step required between placing the preform element on the mold surface and placing the further preform element and/or the blade component and/or the manufacturing tool at its designated position, because otherwise it would be not possible to move the further preform element and/or the blade component and/or the manufacturing tool along the moving path to its designated position. Hence, in this embodiment, two bending processes of the respective bending section are performed, namely between steps a) and b) and in step c).

The bending section can be elastic such that for bringing it from the final shape into the temporary shape between steps a) and b), an elastic counterforce has to be overcome. Then, in step b), the bending section has to be held into the temporary position actively, i.e., a respective bending force has to be sustained, while the further preform element and/or the blade component and/or the manufacturing tool is brought into its designated position. The bending of the bending section in step c) can be performed by cancelling the bending force. Then, the bending section elastically changes into the final shape.

The bending section can be deformable plastically such that for bringing it from the final shape into the temporary shape between steps a) and b), a plastic counterforce of this component has to be overcome. Hence, in step b), the bending section does not have to be held into the temporary position actively, since the performed bending led to the stable temporary shape. In step c), the bending of the bending section can be performed by applying another bending force on the bending section which points into the opposite direction regarding the bending force required for bringing the bending section into the temporary shape. This bending leads to the stable final shape of the bending section.

The bending of the bending section can also be a combination of a plastic and an elastic bending. In other words, once the bending section has been brought from the final shape into the temporary shape or vice versa and released, it will automatically leave its present shape, but not all the way back into the respective other or previous shape, i.e., into the final or temporary shape. For this, a separate bending process is required.

In a possible embodiment of the method according to the present invention, the at least one preform element which is placed on the mold surface in step a) constitutes an overall cross section being an upwards open U-shape which comprises outer ends being the bending sections and projecting above the blade mold. The U-shape can be realized by one preform element having the respective cross section. In this embodiment, at least one of the lateral end sections of the U-shaped preform element is not in contact with the mold surface but projects upwards into the region above the blade mold. This section realizes the bending section. Alternatively, the U-shape can be realized by several preform elements which are located adjacently to each other on the mold surface. The cross sections of the preform elements realizes in summary the overall U-shape. At least one of the lateral end sections of the laterally outer preform elements is not in contact with the mold surface but projects upwards into the region above the blade mold. This section realizes the bending section.

The at least one manufacturing tool can be a mandrel. The mandrel typically provides a sufficient mechanical stability of the blade to be produced or the respective arrangement, wherein the preform elements can constitute an outer skin of the blade. The, particularly frame-like, mandrel can extend over the complete cross-section of the interior of the blade. Several mandrels can be arranged along the longitudinal elongation of the blade. The mandrel can comprise an elongated structure such that it extends over at least a part of the longitudinal expansion of the blade. After the manufacturing process of the blade is finished, the mandrel can be removed from the blade, e.g., by moving the, particularly disassembled mandrel, along the longitudinal direction of the blade and removing it via a blade root opening.

In step b), the mandrel can be placed on the at least one preform element from above via the moving path which leads through the open end of the U-shape. In this embodiment, the mandrel can be lowered onto the blade mold and preform element using a crane. A yoke hanging on a rope of the crane can be provided, wherein the mandrel is held by the yoke. The moving path leads vertically downwards into the open U-shape, while the vertical bars of the U-shape, regarding the temporary shape, have a distance to each other which is sufficient that the mandrel fits in between these bars when it is brought into its designated position.

After the mandrel has been brought into its designated position, at least one of the outer ends of the U-shape, i.e., the at least one bending section, is bent such that these outer ends face each other and block the moving path. In this state, i.e., in the state when the final shape is present, the mandrel is at least partially enclosed by the preform element(s), wherein the U-shape can constitute a C-shape.

According to a possible embodiment of the method according to the present invention, in step a), at least one of the at least one of the outer ends of the U-shape is curved such that this outer end faces the other outer end such that the moving path is blocked, wherein, between steps a) and b), at least one of the outer ends is bent away from the other outer end such that the outer ends do not block the moving path. In this embodiment, the at least one preform element can be manufactured such that it initially or innately comprises the final shape, e.g., the final C-shape. Between steps a) and b), the bending section is bent from the final shape into the temporary shape. During this, the overall cross section is particularly brought from the C-shape into the U-shape having vertical bars with a sufficient distance in between such that the mandrel can be brought into its designated position.

After the mandrel has been brought into its designated position and step c) has been finished, an exposed part on the upper section of the mandrel which is particularly located between the outer ends of the U- or particularly C-shape can remain. To cover this part, after step c), at least one upper preform element can be positioned on the exposed part. The preform element(s) and the upper preform element(s) can realize an overall cross section having a closed O-shape which encompasses the mandrel.

According to a possible embodiment of the method according to the invention, in step b), the at least one further preform element is placed laterally to the at least one preform element on the mold surface, wherein the at least one bending section is at least one lateral section of the at least one preform element, wherein, in step c), the at least one part of the at least one bending section is bent such that it overlaps at least one lateral section of the at least one further preform element. In this embodiment, at least a part of the bending section being in the temporary shape can be bent upwards away from the mold surface such that it does not block the moving path leading to the mold surface from above. Hence, the bending section or its respective part constitutes or comprises a flap which is shut in step c) to realize the overlap.

The lateral section of the preform element and the lateral section of the further preform element can correspond to each other with respect to their shapes. The lateral sections can be laterally protruding and particularly tapered parts of the respective preform elements. Hence, the lateral sections of the preform elements realize a seam between two adjacent preform elements which can be closed by the resin in the further manufacturing of the blade.

Regarding the final shape, the lateral section or bending section, respectively, of the preform element can comprise an upper and a lower protrusion with a space in between. Hence, the lateral section of the preform element can have the shape of a crocodile mouth. A protrusion being the lateral section of the further preform element can be arranged in the space between the upper and the lower protrusion. In this embodiment, the lateral section of the further preform element is sandwiched between the protrusions which realize the lateral section of the preform element. The protrusions can be tapered. While the lower protrusion can be in direct contact with the mold surface, the upper protrusion can realize the flap which is shut in step c).

In a possible embodiment of the method according to the present invention, in step a), at least one part of the at least one bending section elongates parallel to the plane of the mold surface, wherein, between steps a) and b), the at least one part of the at least one bending section is bent upwards away from the mold surface such that it does not block the moving path leading to the mold surface from above. In this embodiment, the at least one preform element can be manufactured such that it innately comprises the final shape, e.g., the shape which is required for overlapping the lateral section of the further preform element. Between steps a) and b), the bending section is bent from the final into the temporary shape. In this state, the lateral section of the further preform element passes the bending section while the further preform element is brought into its designated position.

Preferably, at least one of the at least one bending section comprises a reduced stiffness, particularly a reduced coefficient of elasticity, compared to the rest of the respective preform element. In this embodiment, particularly only the bending section is bendable, while the remainder of the respective preform element can be stiff. The reduced stiffness causes the bending section to be bendable such that bringing it from the temporary shape into the final shape and particularly vice versa does not lead to a damage of the structure of the respective preform element.

The at least one preform element can comprise at least one projecting and flexible, particularly cord-, band- or mat-like, pulling means, wherein the bending or the at least one bending section is performed by pulling the at least one pulling means against a, particularly elastic, counterforce of the respective preform element and attaching a free end of the at least one pulling means on a stationary component, particularly on an upper, lateral flange of the blade mold. The pulling means can be an integral part of the preform element. Hence, a part of the pulling means ca be arranged in the interior of the preform element, particularly between two layers of a stack which constitutes the preform element. The pulling means can be attached on the surface of the preform element, particularly by an adhesive.

Particularly if the pulling means is cord- or band-like, several pulling means can be arranged along the longitudinal elongation of the preform element. Particularly if the pulling means is mat-like, it can extend over at least a part of the longitudinal elongation of the preform element.

The pulling means can be attached on the stationary component by an attaching tool, particularly a clamping tool. The attaching tool can be move- or slidable attached to the stationary component, particularly to the upper, lateral flange of the blade mold, such that the extend of the bending can be adjusted by bringing the attaching tool in the required position.

After step c), the at least one preform element and the at least one further preform element and/or the at least one blade component can be adhered to each other, particularly by infusing resin into and/or on these components. In this step, the final mechanical structure of the blade is achieved, particularly such that the mandrel is not required any more. The resin realizes a mechanical stable connection between the respective components of the blade and, particularly if the resin infiltrates these components, a further stiffening of the components. If the manufacturing tool being the mandrel is provided, this component is not adhered to the (further) preform element, since the mandrel is removed after curing the resin.

The components realizing the final blade can be arranged in a mold cavity which can be realized by the mold surface and optionally by a further mold surface of a further blade mold which is arranged on the blade mold. In the cavity, a vacuum can be evacuated and the resin, e.g., an epoxy resin, can be injected into the cavity. Subsequently, the resin can be hardened at a respective high temperature. Finally, the blade is removed from the blade mold(s) after the resin has been hardened.

The present invention furthermore relates to a preform element to be used in the method as described in the foregoing description. All advantages, aspects and features which have been explained with respect to the method according to the present invention can be transferred to the preform element according to the present invention and vice versa.

The preform element according to the present invention comprises at least one, particularly lateral, bending section with a reduced stiffness compared to the rest of the preform element. The preform element comprises a laminated structure with several layer-like preform components, wherein an activated binding agent adheres adjacent preform components to each other. In the at least one bending section, the adherence between at least two adjacent preform components is reduced compared to the rest of the preform element or undeveloped. The reduced or undeveloped adherence causes the reduced stiffness in the bending section.

The preform components can be initially flexible layers, e.g., consisting of or comprising fiber mats or sheets, which can be stiffened by activating the binding agent. The preform components can comprise a fabric with glass-, carbon- and/or aramid fibers which can be impregnated with the binding agent. The preform components can be rigid or stiff core materials, particularly consisting of balsa wood or a plastic material.

The present invention is furthermore related to a method for manufacturing a preform element as described in the previous section. All advantages, aspects and feature of the method for arranging at least one blade building preform element in the blade mold for further processing according to the present invention and/or of the preform element according to the present invention can be transferred to the method for manufacturing a preform element and vice versa.

The method for manufacturing a preform element according to the present invention is characterized in that several, particularly mat-like and/or stiff, preform components are arranged on a shape-giving preform mold surface of a preform mold to constitute a stack, wherein a binding agent of at least one of the preform components is activated to adhere adjacent preform components to each other.

The preform components can be placed on the preform mold surface of the preform mold being a lower preform mold. A preform mold surface of an upper preform mold can be positioned on the resulting stack. The preform mold surfaces define the shape of the stack and, hence, the preform element to be manufactured. The stack can be arranged in at least one sealed vacuum bag, wherein a vacuum in the vacuum bag can be established such that the shape of the stack adapts to the shape of the preform mold surface(s). Once the stack is in its designated shape, the binding agent can be activated.

The binding agent can be a powder binder which is activatable by, e.g., applying heat. The solid particles of the powder binder are liquified or at least softened by thermal energy and coat the respective preform components. The subsequent cooling of the binding agent causes the preform components to be adhered to each other and/or to be stiffened.

In a possible embodiment of this method according to the present invention, in a, particularly lateral, bending section of the stack, between at least two adjacent preform components a separation component is arranged to prevent or to impede the binding agent from adhering these preform components to each other during the activation of the binding agent. The, particularly impermeable or perforated, separation component is used to prevent the binding agent from getting in contact with both adjacent preform components and, thus, prevents them from being adhered to each other. Alternatively, the separation component can impede the binding agent from getting in contact with both adjacent preform components. Hence, an adhesion effect caused by the binding agent connecting these preform components to each other, is weakened. After the activation of the binding agent, the separation component can be removed from the preform element.

The separation component can be a, particularly perforated, polymer foil, wherein, after the binding agent has been activated, the polymer foil is removed from the preform element, particularly by pulling a protruding section of the polymer foil away from the preform component. Since the polymer foil is arranged in the stack between two preform components, the protruding section can laterally protrude from the resulting preform element. Hence, by pulling the polymer foil on its protruding section, it is removed from the preform component. To facilitate removing the separation component, several layers of the, particularly folded, polymer foil can be arranged between the two adjacent preform components. Exemplarily, one or particularly two or more stacked polymer foils can be folded such that the two open ends of the polymer foil protrude from the resulting preform component.

In the bending section of the stack, the amount of binding agent can be reduced compared to the rest of the preform element. Having less binding agent in this area causes the effect that the adhesive force of the binding agent holding the preform components together is not as large as in the remainder of the preform element.

In the bending section of the stack, less heat can be applied during the activation of the heat-activatable binding agent compared to the rest of the preform element. In this embodiment, the heat in the binding section is reduced compared with the remainder of the preform element. Hence, the binding agent is not completely and, hence, only partially activated in the bending section. Particularly, if the binding agent is the powder binder, only a part of the binding agent can be liquified while the other part remains its powder structure such that the adhesive force is also reduced in this area. A heating means, particularly an oven, for generating different heating temperatures in different areas can be used for this purpose. Additionally or alternatively, thermal isolation means like a isolation sheath can be positioned on the bending section such that the amount of heat which reaches the interior of the bending section during the activation process is reduced.

In the bending section of the stack, after the activation of the binding agent, a mechanical load can be applied to reduce the adherence of the binding agent. In this embodiment, after the binding agent has been activated, external forces are applied to the bending section such that the activated binding agent is broken up at least partially which causes a decrease of the adherence between the respective preform components. The mechanical load can be of mode I, II or III or a combination of these modes. Regarding mode I, the external force acts along a vertical direction regarding the height of the stack. Regarding mode II and III, the external force act along the plane of the layers of the stack. In mode II, these forces are directed laterally outwards and in mode III along the longitudinal direction of the respective preform element.

The present invention is furthermore related to a bending tool for a blade mold or a yoke, comprising a fixing component and a bending component. The fixing component is attachable or attached to the blade mold or to the yoke, particularly by a screwing- or clamping connection. The bending component is movably connected with or attached to the fixing component such that, regarding a state of the bending tool and at least one preform element being held by the blade mold or the yoke, during the movement of the bending component, an interaction between the bending component and a bending section of the at least one preform element leads to the bending of the at least one preform element. The bending component and the fixing component can be connected by a guiding means, particularly a guiding rail, such that the bending component can be linearly moved with respect to the fixing component. Fixing means like clamping means can be provided to fix the current position of the bending component with respect to the fixing component. All advantages, aspects and feature of the method for arranging at least one blade building preform element in the blade mold for further processing according to the present invention and/or of the preform element according to the present invention and/or of the method for manufacturing a preform element according to the present invention can be transferred to the bending tool according to the present invention and vice versa.

The bending tool can be used for the method for arranging the at least one blade building preform element in the blade mold for further processing according to the description above. Moving the bending component with respect to the fixing component being attached to the blade mold or the yoke can cause that at least a part of the bending component gets in interaction, particularly in contact, with the bending section, such that the movement of the bending component causes the bending section to change from the temporary shape into the final shape or vice versa.

In a possible embodiment of the bending tool according to the present invention, the bending component comprises a cross section with at least two bars being angled to each other.

The angle between the bars can between 45° and 135°. One of the bars is movably mounted on the fixing component along its longitudinal direction, wherein the other bar is, regarding a state of the bending tool being held by the blade mold or the yoke, adapted to grasp the bending section during its movement. Particularly, the bending component can comprise an L-shaped cross-section having two bars with an angle of preferable 90° in between. Particularly, one of the bars, e.g., the horizontal bar of the L-shape, is attached to the fixing component and guidable along a horizontal direction. The other bar, e.g., the vertical bar of the L-shape, can protrude downwards such that the bending component engages into the cross-section constituted by the preform element(s).

This embodiment of the bending tool can be particularly used for the method as described above where the at least one preform element which is placed on the mold surface constitutes an overall cross section being the upwards open U-shape. Particularly in this case, the fixing component which can comprise an adjustable height can be attached to an upper, lateral flange of the blade mold. The height of the fixing component can be adjusted such that the horizontal bar is located over one of the bending sections. The vertical bar protrudes downwards into the open end of the U-shape. Moving the bending component laterally outwards with respect to the longitudinal direction of the blade mold or preform element causes the vertical bar to get in contact with the bending section to increase the distance of the bars of the U-shape for releasing the moving path. The bending component can be fixed in the respective end-position by the fixing means such that an elastic counterforce of the preform element is compensated and the moving path remains unblocked. Once the blade component and/or the manufacturing tool has been brought into its designated position, the fixing means can be opened which causes the bending section to get back into its final shape.

Next, a possible embodiment of the bending tool will be described, particularly to be used for the method as described above where the pulling means is provided. The bending components can realize an attaching means for attaching the free end of the pulling means. Moving the bending component leads to the pulling of the pulling means, particularly against an elastic counterforce of the preform element, and, hence, to the bending of the bending section. The bending means can be used to attach the free end of the pulling means to the fixing means being the stationary component. Preferably, the bending component is guidable along a rail-like guiding means on the fixing component to allow different bending amplitudes of the bending section.

The present invention furthermore relates to a preform element handling means, comprising at least one bending tool according to the foregoing description. All advantages, aspects and feature of the method for arranging at least one blade building preform element in the blade mold for further processing according to the present invention and/or of the preform element according to the present invention and/or of the method for manufacturing a preform element according to the present invention and/or of the bending tool according to the present invention can be transferred to the preform element handling means according to the present invention and vice versa.

The handling means can be a yoke for lifting a preform element. The yoke is a, particularly frame-like, means for lifting the preform element. The yoke can comprise preform element attaching means which allow the preform elements being attached to or being held by the yoke. The yoke can comprise a crane connection means which allows the yoke to be connected with and lifted by the rope of a crane.

The handling means can be a blade mold having the bending tool attached particularly to an upper, lateral flange.

Other objects and features of the present invention will become apparent from the following detailed description considered in conjunction with the accompanying drawings. The drawings, however, are only principle sketches designed solely for the purpose of illustration and do not limit the invention. The drawings show schematically:
- Fig. 1: a view of a wind turbine comprising several blades while, for manufacturing the blades, blade building preform elements are arranged in a blade mold for further processing by a method according to a first embodiment of the present invention,
- Fig. 2 - 6: a view of a cross-sectional cut through one of the blades of the wind turbine of fig. 1 during its manufacturing process, wherein the cutting line is indicated VI - VI in fig. 1,
- Fig. 7 - 8: a detailed view on a bending section of the preform elements shown in figures 2 - 6, where a bending tool according to several embodiments of the present invention is used,
- Fig. 9: a cross-sectional view of a preform element according to an embodiment of the present invention, particularly to be used for the method as described with the help of figures 2 - 6, wherein a method according to an embodiment of the invention to manufacture this preform element is described,
- Fig. 10: a detailed cross-sectional view of the preform element of fig. 9 during its manufacturing process, and
- Fig. 11 - 13: details regarding a second embodiment of the method according to the present invention for arranging preform elements in the blade mold for further processing.

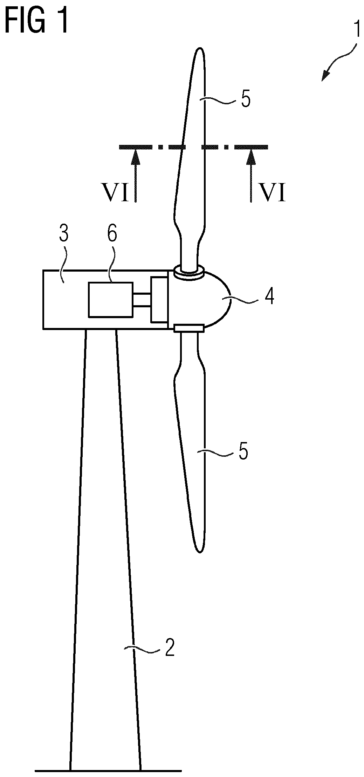

Fig. 1 shows a wind turbine 1 comprising a tower 2 on which a nacelle 3 is arranged. On the front of the nacelle 3, a hub 4 with several, particularly three, blades 5 is provided. The hub 4 is mounted such that it can rotate about a horizontal rotation axis. The wind driven rotation of the hub 4 is transferred to an electric generator 6 which is located in the nacelle 3. The power output of the generator 6 can be in the range of multi-megawatts, particularly between 1 and 40 megawatts.

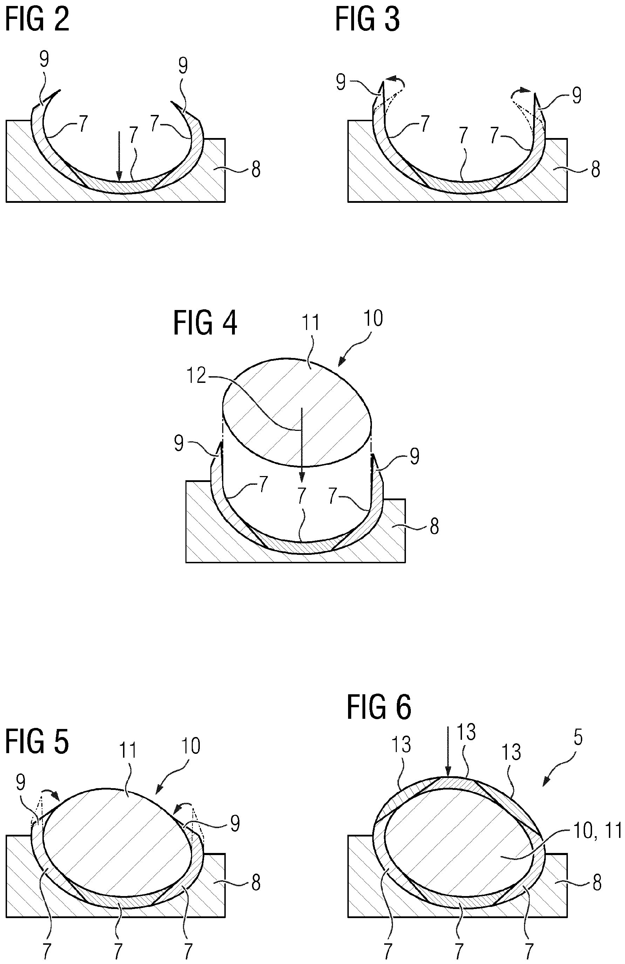

Figures 2 to 6 show the steps of a method according to a first embodiment of the present invention for arranging preform elements 7 in a blade mold 8 for further processing, i.e., for manufacturing the blades 5. Figures 2 to 6 show a cross-sectional cut through the blade 5 to be manufactured, wherein the cutting line which is indicated by VI - VI in fig. 1 is perpendicular to a longitudinal direction of the blade 5, the preform elements 7 and the blade mold 8, respectively.

The blade mold 8 is open with respect to a vertical direction, wherein a mold surface of the blade mold 8 is curved downwards and, hence, concave. Regarding fig. 2, in a first step, exemplarily three preform elements 7 are placed on the mold surface adjacently to each other such that an overall cross-section of the preform elements 3 comprises an upwardly open U-shape. The two lateral preform elements 7 comprise a bending section 9 each which project above the blade mold 8. The bending sections 9, i.e., the outer ends of the U-shape, are curved such that these outer ends face each other. More precisely, in the state of fig. 2, the U-shape realizes a C-shape.

Next, referring to fig. 3, the bending sections 9 are bent outwards or, in other words, away from each other such that the bending sections 9 comprise a temporary shape. This bending is performed against an elastic counterforce of the preform elements 7 or the respective bending sections 9.

Next, referring to fig. 4, a manufacturing tool 10 being a mandrel 11 is placed on the preform elements 7 from above via a moving path 12 which leads through the open end of the U-shape. As can be seen from figures 2 to 4, the bending of the bending sections 9 is necessary because otherwise the bending sections 9 would block the moving path 12 of the manufacturing tool 10, because the manufacturing tool 10 would run against the bending sections 9 such that it would not be possible to bring the manufacturing tool 10 into its designated position. Regarding the longitudinal direction of the blade 5, several manufacturing tools 10 or mandrels 11, respectively, are placed in the interior of the blade 5. The mandrel 11 provides a sufficient mechanical stability of the blade 5 to be produced or the respective arrangement for the manufacturing process. After the blade 5 has been finished, the mandrel 11 is removed from the blade 5, e.g., by moving the, particularly disassembled mandrel 11, along the longitudinal direction of the blade 5 and removing it through an opening of blade 5 on its blade root.

Additionally or alternatively to the manufacturing tool 10, a blade component with a similar structure as the mandrel 11 and which remains in the final blade can be located as described in the foregoing paragraph.

Fig. 5 shows the state where the manufacturing tool 10 is located at its designated position. In the state as shown in fig. 5, the bending sections 9 have been bent from the temporary shape into a final shape. Exemplarily, the final shape is the same shape as shown in fig. 2. As can be seen from fig. 5, the bending sections 9 being in the final shape partially overlap the manufacturing tool 10 such that the bending sections 9 block a reverse movement of the manufacturing tool 10 in the reverse direction along the moving path 12.

Next, referring to fig. 6, upper preform elements 13 are placed on the manufacturing tool 10 such that the preform elements 7 and the upper preform elements 13 constitute an overall cross-section being a closed O-shape which encompasses the manufacturing tool 10. Hence, the preform elements 7 and the upper preform elements 13 constitute an outer skin of the blade 5, wherein the mandrel 11 is located in the interior of the blade 5 and ensures a sufficient mechanical stability of the blade 5 during its manufacturing process.

Regarding the embodiment of the method of the present invention shown in figures 2 to 6, the preform elements 7 or bending sections 9, respectively, initially or innately have the final shape already, wherein the bending or deforming which is shown in fig. 3 causes the bending sections 9 to change into the temporary shape which allows the manufacturing tool 10 to be placed at its designated position. After this, as it is shown in fig. 5, the bending sections 9 are bent back from the temporary shape into the final shape. Alternatively, the preform elements 7 can initially have the temporary shape such that the bending of fig. 3 is not necessary but only the bending of the bending sections 9 from the temporary shape into the final shape which is shown in fig. 5.

After the components of the blade 5 have been brought into their designated positions, as it is shown in fig. 6, the preform elements 7 and the upper preform elements 13 are adhered to each other, particularly by infusing resin into or on these components. For this, exemplarily, an upper blade mold with an upper mold surface which is not shown in the figures is arranged on the blade mold 8 to realize a cavity in which the preform components 7, 13 are arranged. Liquid epoxy resin is induced into this cavity under vacuum conditions and subsequently hardened. In the next step, the mandrel 11 is removed from the finished blade 5.

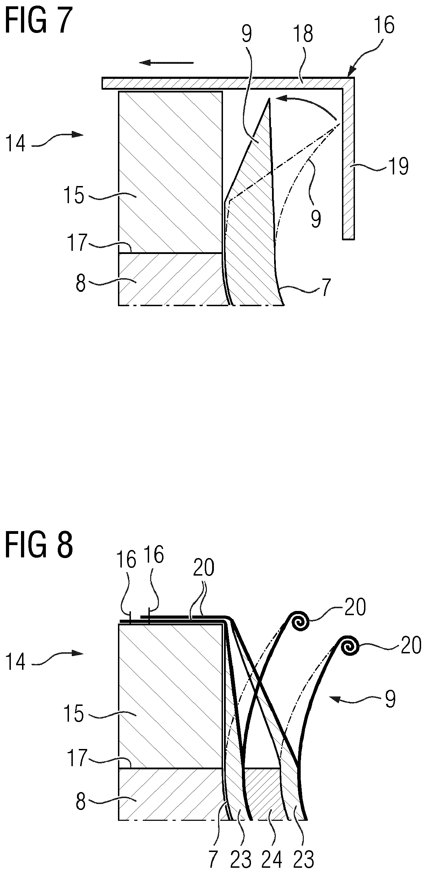

Next, details regarding the step for bending the bending sections 9 as indicated in fig. 3 will be described. Fig. 7 shows a first alternative and fig. 8 a second alternative to perform this bending process.

Referring to fig. 7, a bending tool 14 according to an embodiment of the present invention is shown. The bending tool 14 is a component of the blade mold 8 being a preform element handling means according to an embodiment of the present invention. However, the bending tool 14 can be a separate component regarding the blade mold 8 which is attached thereon. According to another alternative, the bending tool 14 can be a part of a yoke being a preform element handling means according to another embodiment of the present invention. The bending tool 14 can be a separate component regarding the yoke which is attached thereon. The yoke is a, particularly frame-like, means for lifting the preform element. The yoke can comprise preform element attaching means which allow the preform elements being attached to or being held by the yoke. The yoke can comprise a crane connection means which allows the yoke to be connected with and lifted by a rope of a crane.

The bending tool 14 comprises a fixing component 15 and a bending component 16. The fixing component 15 is attached to an upper, lateral flange 17 of the blade mold 8 by, e.g., screwing means, such that the fixing component 15 realizes a stationary component. The fixing component 15 is preferably adjustable with respect to its height. The bending component 16 is movably mounted to the fixing component 15 by, e.g., a rail-like guiding means which is not explicitly shown in the figures. This allows a movement of the bending component 16 with respect to the fixing component 15 along a lateral direction regarding the longitudinal direction of the blade mold 8. The bending component 16 comprises an L-shaped cross-section with a horizontal bar 18 and a vertical bar 19, wherein the horizontal bar 18 is movably mounted on the fixing component 15 and the vertical bar 19 protrudes downwards such that the vertical bar 19 interacts with the preform element 7 while the bending component 16 is moved laterally outwards, wherein this direction is indicated by an arrow in fig. 7.

In fig. 7, the final shape is indicated by a dashed and the temporary shape by a solid line. Once, the bending section 9 is in its temporary shape, the position of the bending component 16 relatively to the fixing component 15 is fixed by a fixing means, particularly a clamping means, which is not shown in the figures. The bending process shown in fig. 7 is executed against an elastic counterforce of the bending section 9. Once the manufacturing tool 10 has been brought into its designated position (see fig. 5) the fixing means is opened or released such that the bending section 9 elastically returns into its final shape overlapping the manufacturing tool 10. However, it is also possible that bending section 9 does not elastically move all the way back into the final shape. In this case, a further bending step for bringing the bending section 9 into the final shape is executed.

Regarding the longitudinal direction of the blade mold 8, several bending tools 14 can be arranged. Alternatively, one bending tool 14 which extends over a large or the complete part of the longitudinal direction of the blade mold 8 can be provided, wherein the bending component 16 can be an angular rail, particularly with an L-shaped cross section, with a respective longitudinal elongation. Preferably, several bending tools 14 are on the left and on the right side of the blade mold 8, particularly on the opposite lateral flanges 17.

Fig. 8 shows a second alternative regarding the bending process shown in fig. 3. The preform element 7 of fig. 8 comprises a stack-like structure having several layers. Exemplarily, two stacks 23 of fiber-sheets and a rigid or stiff core component 24 which is made of balsa wood and which is sandwiched between the stacks 23 are provided. In contrast to the stacks 23, the core component 24 does not extend above the blade mold 8 such that the flexibility which is required for bending the bending section 9 is ensured.

The preform element 7 comprises projecting and flexible, particularly cord-, band- or mat-like, pulling means 20, wherein each of the pulling means 20 is connected with one of the stacks 23. In this embodiment, the free end of the pulling means 20 can be attached to the bending components 16 to pull the pulling means 20 against the elastic counterforce of the preform element 7. Attaching means, particularly clamping means of the bending tool 14, are provided to attach the bending components 16 and, hence, the free ends of the pulling means 20 on the fixing component 15. The two bending components 16 are guidable along a respective rail-like guiding means to allow different bending amplitudes of the bending section 9. Alternatively, instead of the bending tool 14, in the embodiment of fig. 8, the pulling means 20 can be attached directly on the flange 17 or somewhere on the outside of the blade mold 8.

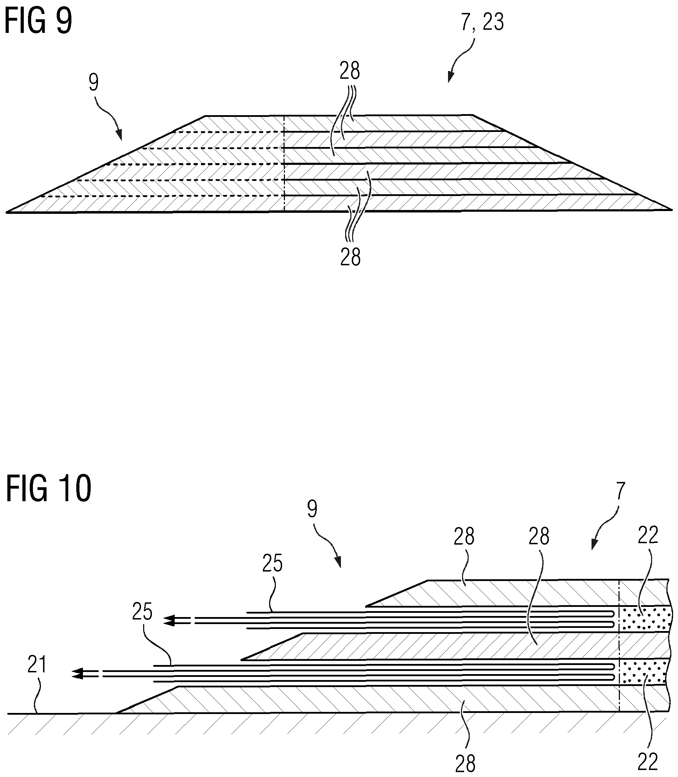

Fig. 9 shows details regarding a preform element 7 according to an embodiment of the present invention, particularly being one of the outermost preform elements 7 of fig. 2. In fig. 9, one of the stacks 23 which is a part of the bending section 9 and which comprises several preform components 28 is shown. In fig. 9, the curved structure of the preform element 7 as indicated in fig. 2 is not shown. The bending section 9 comprises a reduced stiffness compared to the rest or remainder of the respective preform element 7. The preform element 7 comprises a laminated structure with several layer-like preform components 28, wherein an activated binding agent 22 (not shown in fig. 9) adheres adjacent preform components 28 to each other. In the bending section 9, the adherence between adjacent preform components 28 is reduced compared to the rest of the preform element or even undeveloped. The reduced adherence is indicated by the dashed lines between the respective preform components 28.

Next, referring to fig. 10, details regarding a method for manufacturing the preform element 7 according to an embodiment of the present invention are described. Fig. 10 shows a lower part of the stack 23 of fig. 9 The preform components 28 are arranged on a shape-giving preform mold surface 21 of a preform mold to constitute the stack 23, wherein the binding agent 22 is activated to adhere the preform components 28 to each other. The binding agent 22 is preferably a powder binder which is activatable by applying heat. The preform components 28 are mat-like fibre-sheets and realized by a fabric with glass-, carbon- and/or aramid fibers each which is impregnated with the binding agent 22.

Between two adjacent preform components 28, separation components 25 are arranged to prevent or impede the binding agent 22 from adhering these preform components 28 to each other during the activation of the binding agent 22. As separation components 25, two folded polymer foils which laterally protrude from the preform element 7 are provided. The polymer foils can be impermeable or perforated. After the activation of the binding agent 22, the polymer foils are removed from the preform element 7 by pulling the respective protruding sections of the polymer foils away from the preform element 7. This process is indicated by respective arrows in fig. 10.

However, the reduced adherence between the preform components 28 can be realized in other ways. Exemplarily, the amount of binding agent 22 in the bending section 9 can be reduced compared to the rest of the preform element 7. Additionally or alternatively, less heat can be applied during the activation of the heat-activatable binding agent 22 compared to the rest of the preform element 7. The reduced adherence of the binding agent in the bending section 9 can also be realized after the binding agent 22 has been activated, namely by applying a mechanical load to the bending section 9 after the activation of the binding agent 22. External forces can be applied to the bending section 9 such that the activated binding agent 22 is broken up at least partially which causes a decrease of the adherence. The external forces or mechanical load, respectively, can be of mode I, II or III or a combination of these modes.

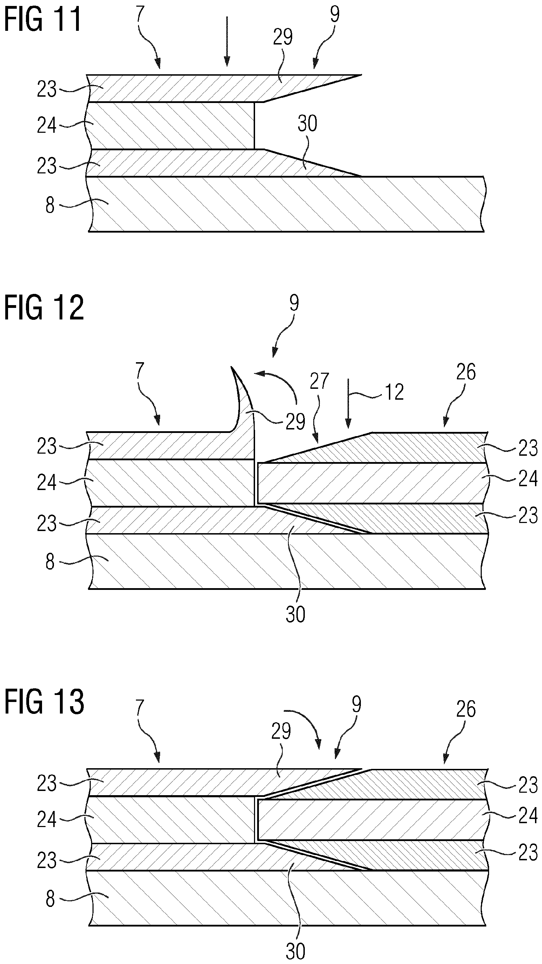

Figures 11 to 13 show steps of the method according to a second embodiment of the present invention for arranging preform elements 7 in a blade mold 8 for further processing. In this embodiment, a further preform element 26 is placed on the mold surface of the blade mold 8 after the preform element 7 has been placed thereon.

The bending section 9 of the preform element 7 is a lateral section and comprises an upper protrusion 29 and a lower protrusion 30 being tapered and having a space in between. Hence, the bending section 9 has the shape of a crocodile mouth. A tapered, lateral section 27 of the further preform element 26 is arranged in the space between the protrusions 29, 30. In the final blade 5, the lateral section 27 of the further preform element 26 is sandwiched between the protrusions 29, 30 of the preform element 7.

Regarding fig. 11, in this embodiment the protrusions 29, 30 elongate parallel to the plane of the mold surface of the blade mold 8. Next, according to fig. 12, the upper protrusion 29 is bent upwards away from the mold surface of the mold blade 8. However, it is also possible that the bending section 9 already initially comprises the temporary shape such that the bending process which is necessary to get from the situation shown in fig. 11 to the situation shown in fig. 12 is not necessary.

Next, the further preform element 26 is placed laterally to the preform element 7 on the mold surface of the blade mold 8. The respective moving path 12 leads from above onto the mold surface (see fig. 12). Next, as shown in fig. 13, the bending section 9 is bent such that it overlaps the lateral section 27 of the further preform element 26. The protrusions 29, 30 and the lateral section 27 of the further preform element 26 correspond each other in their shapes.

In the embodiment which has been explained by the help of figures 11 to 13, the specific case having a double-scarf joint between the preform element 7 and the further preform element 26 is described. However, other kind of joints are also possible. Regarding other kind of joints, the bending section 9 of the preform element 7 is generally bent out of the way in order to place the further preform element 26.

Although the present invention has been described in detail with reference to the preferred embodiment, the present invention is not limited by the disclosed examples from which the skilled person is able to derive other variations without departing from the scope of the invention.

## Claims

1. Method for arranging at least one blade building preform element (7) in a blade mold (8) for further processing, comprising the steps:
a) placing the at least one preform element (7) on a mold surface of the blade mold (8),
b) placing at least one further preform element (26) and/or at least one blade component and/or at least one manufacturing tool (10) on the mold surface and/or on the at least one preform element (7) by moving it in a moving direction along a moving path (12), and
c) bending at least one part of at least one bending section (9) of the at least one preform element (7) such that the at least one bending section (9) at least partially overlaps the at least one further preform element (26) and/or the at least one blade component and/or at least one manufacturing tool (10) such that the at least one bending section (9) blocks a reverse movement of the at least one further preform element (26) and/or the at least one blade component and/or at least one manufacturing tool (10) in the reverse direction along the moving path (12).

2. Method according to claim 1, **characterized in that**, in step a), the at least one bending section (9) of the at least one preform element (7) which is placed on the mold surface blocks the moving path (12) of the at least one further preform element (26) and/or of the at least one blade component and/or at least one manufacturing tool (10), wherein, between steps a) and b), the at least one bending section (9) is bent such that the at least one bending section (9) does not block the moving path (12).

3. Method according to claim 1 or 2, **characterized in that** the at least one preform element (7) which is placed on the mold surface in step a) constitutes an overall cross section being an upwards open U-shape which comprises outer ends being the bending sections (9) and projecting above the blade mold (8), wherein the at least one manufacturing tool (10) is a mandrel (11) which, in step b), is placed on the at least one preform element (7) from above via the moving path (12) which leads through the open end of the U-shape.

4. Method according to claims 2 and 3, **characterized in that**, in step a), at least one of the at least one of the outer ends of the U-shape is curved such that this outer end faces the other outer end such that the moving path (12) is blocked, wherein, between steps a) and b), at least one of the outer ends is bent away from the other outer end such that the outer ends do not block the moving path (12).

5. Method according to one of the preceding claims, **characterized in that**, in step b), the at least one further preform element (26) is placed laterally to the at least one preform element (7) on the mold surface, wherein the at least one bending section (9) is at least one lateral section of the at least one preform element (7), wherein, in step c), the at least one part of the at least one bending section (9) is bent such that it overlaps at least one lateral section (27) of the at least one further preform element (26).

6. Method according to claims 2 and 5, **characterized in that**, in step a), at least one part of the at least one bending section (9) elongates parallel to the plane of the mold surface, wherein, between steps a) and b), the at least one part of the at least one bending section (9) is bent upwards away from the mold surface such that it does not block the moving path (12) leading to the mold surface from above.

7. Method according to one of the preceding claims, **characterized in that** at least one of the at least one bending section (9) comprises a reduced stiffness compared to the rest of the respective preform element (7).

8. Method according to one of the preceding claims, **characterized in that** the at least one preform element (7) comprises at least one projecting and flexible, particularly cord-, band- or mat-like, pulling means (20), wherein the bending of the at least one bending section (9) is performed by pulling the at least one pulling means (20) against a counterforce of the respective preform element (7) and attaching a free end of the at least one pulling means (20) on a stationary component, particularly on an upper, lateral flange (17) of the blade mold (8).

9. Method according to one of the preceding claims, **characterized in that**, after step c), the at least one preform element (7) and the at least one further preform element (26) and/or the at least one blade component are adhered to each other, particularly by infusing resin into and/or on these components.

10. Preform element to be used in the method according to one of the preceding claims, comprising at least one, particularly lateral, bending section (9) with a reduced stiffness compared to the rest of the preform element (7), wherein the preform element (7) comprises a laminated structure with several layer-like preform components (18), wherein an activated binding agent (22) adheres adjacent preform components to each other, wherein, in the at least one bending section (9), the adherence between at least two adjacent preform components (18) is reduced compared to the rest of the preform element (7) or undeveloped.

11. Method for manufacturing a preform element (7) according to claim 10, **characterized in that** several, particularly mat-like and/or stiff, preform components (18) are arranged on a shape-giving preform mold surface (21) of a preform mold to constitute a stack, wherein a binding agent (22) of at least one of the preform components (18) is activated to adhere adjacent preform components (18) to each other, wherein in a, particularly lateral, bending section (9) of the stack,
- between at least two adjacent preform components (18) an separation component (25) is arranged to prevent or to impede the binding agent (22) from adhering these preform components (18) to each other during the activation of the binding agent (22), and/or
- the amount of binding agent (22) is reduced compared to the rest of the preform element (7), and/or
- less heat is applied during the activation of the heat-activatable binding agent (22) compared to the rest of the preform element (7), and/or
- after the activation of the binding agent (22), a mechanical load is applied to reduce the adherence of the binding agent (22).

12. Method according to claim 11, wherein between at least two adjacent preform components (18) the separation component (25) is arranged, **characterized in that**, the separation component (25) is a polymer foil, wherein, after the binding agent (22) has been activated, the polymer foil is removed from the preform element (7), particularly by pulling a protruding section of the polymer foil away from the resulting preform element (7).

13. Bending tool for a blade mold (8) or a yoke, comprising a fixing component (15) and a bending component (16), wherein the fixing component (15) is attachable or attached to the blade mold (8) or to the yoke, wherein the bending component (16) is movably mounted on the fixing component (15) such that, regarding a state of the bending tool (14) and at least one preform element (7) being held by the blade mold (8) or the yoke, during the movement of the bending component (16), an interaction between the bending component (16) and a bending section (9) of the at least one preform element (7) leads to the bending of the at least one preform element (7).

14. Bending tool according to claim 13, **characterized in that** the bending component (16) comprises a cross section with at least two bars being angled to each other, wherein one of the bars (18) is movably mounted on the fixing component (15) along its longitudinal direction, wherein the other bar (19) is, regarding a state of the bending tool (14) being held by the blade mold (8) or the yoke, adapted to grasp the bending section (9) during its movement.

15. Preform element handling means, comprising at least one bending tool (14) according to claim 12 or 13, wherein the handling means is a yoke for lifting a preform element (7) or a blade mold (8) having the bending tool (14) attached particularly to an upper, lateral flange (17) .
